# EUROPEAN PATENT APPLICATION

(11) **EP 4 300 074 A1**
(43) Date of publication of application: **03.01.2024**
(21) Application number: 22717713.6
(22) Date of filing: 22.02.2022
(51) Int. Cl.: G01N 15/02, G01N 29/04, G01N 29/14, G01N 29/44

(54) **GRAIN GRANULOMETRY MEASUREMENT SYSTEM AND METHOD AND CALIBRATION METHOD FOR A GRAIN GRANULOMETRY MEASUREMENT SYSTEM**

(30) Priority: 23.02.2021 BR 102021003364
(71) Applicant: Bunge SA, 1206 Geneva (CH)
(72) Inventor: ALVES DA COSTA JUNIOR, Mário, 88054-605 Florianópolis - SC (BR); MONTEIRO VERAS, Rafael, 88040-360 Florianópolis - SC (BR); SARAIVA DA SILVA, Ramiro, 88037-260 Florianópolis - SC (BR); OLIVEIRA CABEÇA NEVES, Carlos Fernando, 88034-389 Florianópolis - SC (BR); BONNARD, Renan, 880510-010 Florianópolis - SC (BR)
(74) Representative: Keltie LLP
(86) International application number: PCT/BR2022/050054
(87) International publication number: WO 2022/178606

(57) **Abstract**

Patent of Invention: **"SYSTEM AND METHOD FOR MEASURING GRAIN PARTICLE GRANULOMETRY AND GRAIN PARTICLE GRANULOMETRY MEASUREMENT SYSTEM CALIBRATION METHOD".**

A measurement system (100), a measurement method, and a calibration method for a grain particle granulometry measurement system run through a cracking process, in order to define their particle granulometry and analyze its functioning. The grain particle granulometry measurement system (100) comprises: a vibration measurement device (110); and the processing unit (150) connected to the vibration measurement device (110), wherein the vibration measurement device (110) is configured to measure the vibration characteristics of a vibration caused by impacts generated by the grain flow in the vibration measurement device. The grain particle granulometry measurement method comprises: measuring (320) the vibration characteristics caused by the impact of the grain flow; and calculating (370) the grain particle granulometry in the grain flow. The calibration method for a grain particle granulometry measurement system comprises: classifying (220) grain samples by particle granulometry; measuring (240) the vibration characteristics of a vibration caused by the impact of the grain flow of each one of the samples; and creating (280) a mathematical model, based on the measured vibration characteristics for each one of the grain samples.

## Description

This invention refers to a measurement system, a measurement method, and a calibration method for a grain particle granulometry measurement system run through a cracking process, in order to define their particle granulometry and analyze its functioning.

### Background Art

The methods for measuring the grain particle granulometry, for example, cracked soybeans, that are widely known and used at the prior art involve a non-automated measurement of the grains. This non-automated measurement method requires the practical training and development of qualified workers skilled in obtaining information from the measured matter, in this case, cracked grains. This need leads to dependence on a skilled worker who is trained and qualified to handle this job. Furthermore, human errors associated with measurements, process slowdowns, and possible non-measurements increase the inefficiency of non-automated methods, causing losses to the industry.

In order to lessen possible human errors and enhance process efficiency, several segments of the agricultural industry developed devices as substitutes that can handle some tasks performed inefficiently by people.

An example of a device at the prior art developed to solve the problem of monitoring the quality of agricultural produce and fruits during processing, storage, and/or transportation is described in document BR 102013021712-3. This device is intended to detect and quantify the impacts imposed on fruits and vegetables during post-harvest processing, in order to reduce the amount of bruising and crushing, thus extending the useful life of this produce. The devices at the prior art that were created for these purposes and have some characteristics that are similarto the produce to be monitored, in this case, fruits and vegetables, are called pseudofruits in the mentioned document.

However, these devices at the prior art are configured to simulate the characteristics of the monitored produce, such as, for example, being spherical in shape to define the presence of physical damage to foods stored or transported with the device. Consequently, the devices known at the prior art are not suitable for measuring particle granulometry in flows of cracked grains with efficiency and precision, nor for analyzing their functioning.

### Purposes of the Invention

In view of the problems described at the prior art, the purpose of this invention is to provide a grain particle granulometry measurement system, a grain particle granulometry measurement method, and a calibration method for a grain particle granulometry measurement system that can measure grain particle granulometry, based on the vibration characteristics of a vibration generated by the impact of the grain flow on a surface.

The measurements performed by the system and methods addressed by this invention of the vibration characteristics generated by the impact of the grain flow onto a surface result in more precise and efficient measurements of grain particle granulometry, such as, for example, cracked soybeans, compared to solutions available at the prior art. Furthermore, the system and methods addressed by this invention allow this measurement to be performed in an automated and continuous manner.

### Brief Description of the Invention

This invention describes a grain particle granulometry measurement system that comprises a vibration measurement device and a processing unit. The processing unit is connected to the vibration measurement device. The vibration measurement device is configured to measure the vibration characteristics of a vibration caused by impacts generated by the grain flow in the vibration measurement device and send the measured vibration characteristics to the processing unit.

The processing unit may be configured to estimate the particle granulometry of the grain flow, based on the vibration characteristics. The grain flow particle granulometry may be estimated, based on a mathematical model predefined in the processing unit. The mathematical model may be defined based on the measured vibration characteristics, based on the grain flow from samples classified by particle granulometry.

The vibration measurement device comprises a vibration sensor. The vibration sensor may be an accelerometer. The vibration sensor may be a capacitive accelerometer.

The vibration measurement device comprises an impact plate, wherein the impacts generated by the grain flow in the vibration measurement device are generated on the impact plate. The impact plate may be a contact surface configured to withstand impacts resulting from the grain flow and allow the vibration sensor to collect information on the impacts generated by the grain flow. The surface of the impact plate may be inclined in relation to the direction of the grain flow.

The vibration measurement device may also comprise a regulator and a passageway, wherein the regulator is connected to the passageway and the passageway is connected to the impact plate, wherein the regulator limits the grain flow, wherein the impact plate is inclined in relation to the longitudinal axis of the passageway.

This invention describes a grain particle granulometry measurement method that comprises the steps of: measuring the vibration characteristics caused by the impact of the grain flow through a vibration measurement device; and calculating a grain particle granulometry in the grain flow, based on the measured vibration characteristics. The step of calculating the grain particle granulometry comprises inserting the vibration characteristics into a predefined mathematical model.

The grain particle granulometry measurement method may also comprise a step of creating a mathematical model, based on the vibration characteristics of the grain flow from samples screened individually.

This invention also describes a calibration method for a grain particle granulometry measurement system that comprises the steps of: classifying grain samples by particle granulometry; measuring the vibration characteristics of a vibration caused by the impact of the grain flow of each one of the grain samples through a vibration measurement device; and creating a mathematical model, based on the measured vibration characteristics for each one of the grain samples. The mathematical model may be a set of equations prepared in a manner that allows the calculation of a grain particle granulometry for the grain flow whose particle granulometry is unknown. The step of classifying grain samples individually may be performed through screening.

### Brief Description of the Drawings

This invention will be described in greater detail below, based on an example of its embodiment, shown in the drawings. The Figures display:
Figure 1 - is a schematic diagram of an embodiment from the grain particle granulometry measurement system addressed by this invention;
Figure 2 - is the side view of the vibration measurement device of an embodiment from the grain particle granulometry measurement system addressed by this invention;
Figure 3 - is a sequence of steps for an embodiment of the calibration method for a grain particle granulometry measurement system addressed by this invention; and
Figure 4 - is a sequence of steps for an embodiment of the grain particle granulometry measurement method addressed by this invention.

### Detailed Description of the Drawings

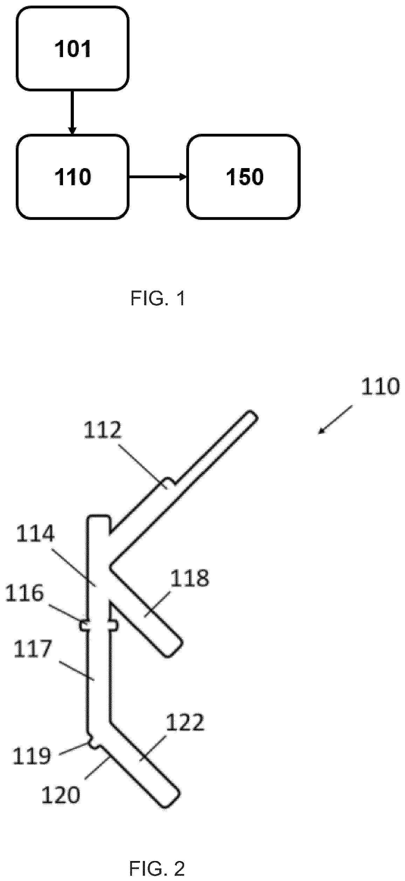

Figure 1 shows a schematic diagram from the grain particle granulometry measurement system 100 according to an embodiment of this invention. In this example of an embodiment, the grain particle granulometry measurement system 100 comprises a vibration measurement device 110 and the processing unit 150.

The vibration measurement device 110 and the processing unit 150 are interconnected, whereby the vibration measurement device 110 is configured to send information to the processing unit 150. This information is sent through a signal transmission which may be handled by remote or physical connections, not being limited to any specific signal transmission type.

The grain particle granulometry measurement system 100 addressed by this invention is positioned close to a grain flow 101 source where the grain flow originates. An example of a grain flow 101 source, according to one embodiment, is a cracking mill. The cracking mill may be, for example, a soybean cracking mill. In this case, the grain particle granulometry measurement system 100 can assess whether the soybeans processed in the cracking mill are compliant with the desired specifications. Although a mill is used as an example of a grain flow 101 source in this embodiment, the grain flow may come from other sources, such as, for example, a storage bin or a plurality of screens or sieves. This last example may be used, for example, during system calibration.

An embodiment of the vibration measurement device 110 is shown in Figure 2. In this embodiment, the vibration measurement device 110 comprises a hollow body with a square, rectangular, or circular cross-section. The body of the vibration measurement device 110 comprises a collection element 112, a grain tank 114, a regulator 116, a first return path 118, a vibration sensor 119, a second return path 122, and an impact plate 120. These elements comprising the body of the vibration measurement device 110 are interconnected, whereby the grain flow from the grain flow 101 source Jen flow through the vibration measurement device 110, whereby the grain particle granulometry measurement can be performed.

The collection element 112 handles the collection of the grain flow. In this embodiment, the collection element 112 comprises a grain flow receiving end where the grains forming the grain flow are received. The receiving end is an open section of the hollow body that allows the grain flow to enter the device. The opening in the open section may be accentuated by a longitudinal cut along a section of the collection element 112, for easier receipt of the grains.

The collection element 112 is connected to the grain tank 114 to which the grain flow is directed after its receipt in the vibration measurement device 110. In addition to being connected to the collection element 112, the grain tank 114 is also connected to the first return path 118 and the regulator 116. The grain tank 114 is configured to hold grains coming from the collection element 112 and that will subsequently run through the regulator 116 or the first return path 118. As it accumulates grains in its interior, the grain tank 114 may reach the grain holding limit, which is defined by its construction characteristics. When this grain holding limit is reached, the grains accumulated in the grain tank 114 are directed to the first return path 118.

The first return path 118 is configured to limit the quantity of grains held in the grain tank 114. When the accumulation of grains reaches the position where the first return path 118 is connected to the grain tank 114, the grains are directed to the first return path 118. Having run through the first return path 118, the grains are directed to other finalities, such as, for example, returning to the grain flow that will be measured by the vibration measurement device 110 or going to another destination.

The regulator 116 is the component of the vibration measurement device 110 that regulates the grain flow that will be measured. In other words, if the grain flow is higher than the level suitable for performing the measurement, it is restricted or limited by the regulator 116. In this embodiment, the regulator 116 represents a narrow region of the body of the vibration measurement device 110, in other words, a reduction in the cross-section at a defined point. This narrowing controls the passage of the grain flow. Although a specific form of grain flow regulation is described, other means of limitation may also be used.

The regulator 116 is connected to the grain tank 114 and a passageway 117 that directs the grain flow towards the impact plate 120, where the vibration sensor 119 performs the measurement. The impact plate 120 is a contact surface of the vibration measurement device 110 configured to withstand an impact of the grain flow. The surface of the impact plate 120 is a surface configured to withstand the impacts of the grain flow and to generate vibration, based on this impact. This vibration can be measured by the vibration sensor 119 located close to or on the impact plate and allows the vibration sensor 119 to collect information on the impacts generated by the grain flow on the impact plate 120.

To generate the vibration to be measured by the vibration sensor 119, the impact plate 120 is inclined in relation to the longitudinal axis of the passageway 117, in other words, inclined, in relation to the direction of the grain flow. This inclination allows the grain flow to come into contact with the impact plate 120, resulting in an impact that generates the vibration.

In one embodiment, the vibration sensor 119 of the vibration measurement device 110 is an accelerometer that can measure the actual exhilaration of the vibration measurement device 110 in relation to the grain flow. In this embodiment, the accelerometer is a capacitive accelerometer. However, other types of accelerometers may also be used, such as, for example, a piezoelectric accelerometer and a piezoresistive accelerometer. Furthermore, the vibration sensor 119 may be another type of sensor able to measure a force of impact, vibration and/or acceleration.

The vibration sensor 119 is the element of the vibration measurement device 110 that translates the vibration or the impact received through the impact plate 120 when hit by the grain flow into an electrical signal that may be sent to the processing unit 150 for processing the information. By connecting the vibration sensor 119 with the impact plate 120, the vibration measurement device 110 can measure the vibration characteristics of the vibration caused by the impacts of the grain flow on the impact plate 120 and send the measured vibration characteristics to the processing unit 150.

The vibration characteristics are information on the frequency with which the vibration sensor 119 can capture the vibration generated by the impact of the grain flow on the impact plate 120. These vibration characteristics are sent to the processing unit 150 so that the processing unit 150 can estimate the grain flow particle granulometry whose vibration characteristics were measured.

In an alternative embodiment, the grain flow may be dosed so that the impact of each grain in the grain flow is spaced out, thus generating a dynamic response with no overlapping. In this manner, it would thus be possible to conduct an analysis of the signals in the time domain, in order to estimate particle granulometry.

In one embodiment, a grain flow particle granulometry is estimated, based on a mathematical model predefined in the processing unit 150. The mathematical model is a set of equations drawn up in a manner that allows the control unit to calculate the grain particle granulometry of the grain flow whose particle granulometry is unknown.

This mathematical model may be inserted into the processing unit 150, based on information from external databases, or developed, based on a calibration conducted within the grain particle granulometry measurement system 100. The calibration mathematical model is defined based on the measured vibration characteristics, based on the grain flow from samples classified by particle granulometry.

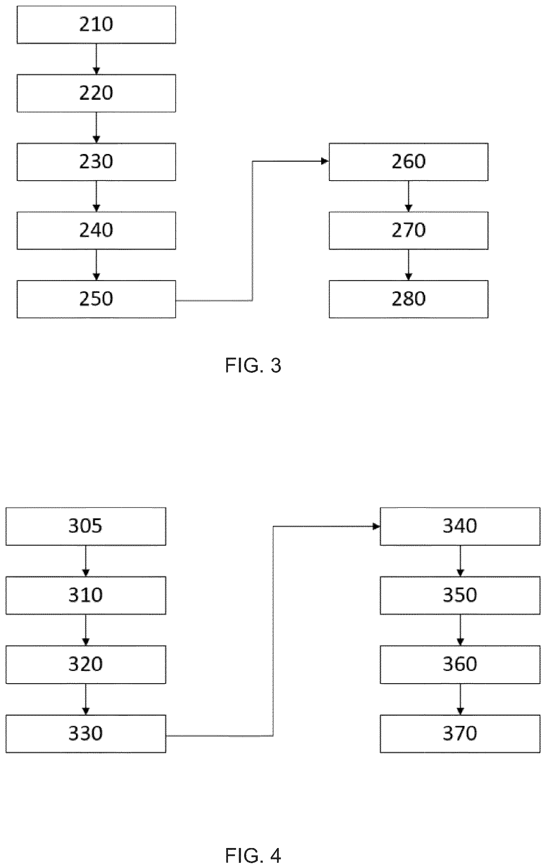

Figure 3 shows the calibration method from the grain particle granulometry measurement system according to an embodiment of this invention. The calibration method from the grain particle granulometry measurement system is one of the ways of defining the mathematical model to be used in the grain flow particle granulometry measurements. Furthermore, in one embodiment, the calibration method from the grain particle granulometry measurement system is designed to operate under the conditions at the location where the grain particle granulometry measurement system will be installed.

The calibration method is performed through collecting vibration data on individually-screened or sieved grain samples. The individual vibration data are stored and processed in the processing unit, through a computer program, and algorithms are drawn up to develop the mathematical model, whose purpose is to perform the grain particle granulometry measurements with precision and accuracy.

Initially, a step of separating 210 grain samples is performed, based on their particle granulometry characteristics. The grain samples are sets of grains separated into groups with similar characteristics. Next comes a step of classifying 220 the grain samples according to their particle granulometries. The step of classifying the grain samples individually may be performed through screening, for example, or any other means of classifying grain samples.

This separation 210 and classification 220 of the grain samples allows the processing unit to create the mathematical model that will be used in the grain particle granulometry measurement method.

After classifying 220 the grain samples according to their particle granulometries, a step of generating 230 the grain flow for each one of the grain samples separately is performed. Next comes a step of measuring 240 the vibration characteristics of the vibration caused by the impact of the grain flow of each one of the grain samples in the vibration measurement device. In other words, each grain flow generated for each one of the grain samples is brought into contact with the vibration measurement device. These contacts, or impacts, generate vibrations with different vibration characteristics for each one of the grain samples. Cross-referencing information on the different vibration characteristics with the known grain sample particle granulometries leads to the creation of the mathematical model.

In order to ensure that it is possible to cross-references information, the vibration sensor of the vibration measurement device performs the step of translating 250 the generated vibrations into electrical signals, sending these signals to the processing unit. On receipt of the signal from the vibration measurement device, the processing unit starts a step of performing 260 a signal processing operation of the received signals. Next comes a step of performing 270 a data processing operation in order to organize and extract relevant information from the measured vibration characteristics.

Based on the measured vibration characteristics for each one of the grain samples by the vibration measurement device, and by using the algorithms developed to create the mathematical models, a step of creating 280 the mathematical model is performed. The mathematical model is a set of equations created in a manner that allows the processing unit to calculate the grain particle granulometry of the grain flow whose particle granulometry is unknown. Thus, with the mathematical model created, the grain particle granulometry measurement system is calibrated, whereby grain flows whose particle granulometry is unknown can be measured.

Figure 4 shows the grain particle granulometry measurement method according to an embodiment of this invention. In this embodiment, the grain particle granulometry measurement method is performed in order to measure the grain particle granulometry of the grain flow from a grain cracking mill, or any other cracking and/or storage source of grains, such as cracked soybeans, for example.

For the grain particle granulometry to be measured, it is necessary to generate 310 the grain flow comprising the grains whose measurement is desired. When coming into contact with the vibration measurement device of a grain particle granulometry measurement system, the grain flow generates a vibration caused by the impact of the grains in the vibration measurement device. Next comes a step of measuring 320 the vibration characteristics caused by this impact of the grain flow in the vibration measurement device.

In one embodiment, the step of measuring 320 the vibration characteristics is performed by the vibration measurement device, which then performs a step of translating 330 the measured vibration characteristics into an electrical signal that may be sent to the processing unit. On receipt of the signal from the vibration measurement device, the processing unit starts a step of performing 340 a signal processing operation of the received signals. Next comes a step of performing 350 a data processing operation in order to organize and extract relevant information from the measured vibration characteristics.

The grain particle granulometry measurement method also comprises a step of inserting 360 the vibration characteristics in the mathematical model predefined in the processing unit. In one embodiment, inserting the vibration characteristics into the predefined mathematical model is possible after the described processing stages have been performed. Furthermore, the mathematical model predefined in the processing unit a model is created, based on a calibration method for a grain particle granulometry measurement system, as described above. The mathematical model also may be created in an additional step in the grain particle granulometry measurement method, in other words, a step of creating 305 the mathematical model, based on the vibration characteristics of the grain flow from samples screened individually. Alternatively, the mathematical model may be obtained, based on information from external databases, with no calibration required.

When inserting the vibration characteristics into the predefined mathematical model, the processing unit performs a step of calculating the grain particle granulometry in the grain flow. Calculating particle granulometry in grain flows coming from the cracking mill allows cracked grain particle granulometry distribution to be estimated. Estimating cracked grain particle granulometry distribution allows an assessment of whether the cracked grains are compliant with the desired specifications.

The embodiments described for the system and method for measuring the grain particle granulometry eliminate the need for human intervention in the grain particle granulometry measurement process, whereby the particle granulometry can be measured continuously and automatically, directly at the cracking mill outflow point. Furthermore, mistakes resulting from human actions are eliminated, and the result is obtained in a manner that is more efficient and accurate than the teachings known at the prior art.

The embodiments of the calibration method for a grain particle granulometry measurement system as described support the creation of a mathematical model for calculating the grain particle granulometry in the grain flow. This model is created in a manner that is more efficient and accurate than the teachings known at the prior art.

Having described an example of an embodiment, it must be understood that the scope of this invention encompasses other possible variations, being limited only by the content of the Claims appended hereto, with possible equivalents included therein.

## Claims

1. A grain particle granulometry measurement system (100), **characterized in that** it comprises:
a vibration measurement device (110); and
a processing unit (150) connected to the vibration measurement device (110),
wherein the vibration measurement device (110) is configured to measure vibration characteristics of a vibration caused by impacts generated by the grain flow in the vibration measurement device (110) and send the measured vibration characteristics to the processing unit (150),
wherein the processing unit (150) is configured to estimate the particle granulometry of the grain flow, based on the vibration characteristics.

2. A grain particle granulometry measurement system (100), according to Claim 1, **characterized in that** the grain flow particle granulometry is estimated, based on a mathematical model predefined in the processing unit (150).

3. A grain particle granulometry measurement system (100), according to Claim 2, **characterized in that** the mathematical model is defined, based on the measured vibration characteristics, based on the grain flow from samples classified by particle granulometry.

4. A grain particle granulometry measurement system (100), according to any one of Claims 1 to 3, **characterized in that** the vibration measurement device (110) comprises a vibration sensor (119), wherein the vibration sensor (119) is an accelerometer.

5. A grain particle granulometry measurement system (100), according to Claim 4, **characterized in that** the vibration sensor (119) is a capacitive accelerometer.

6. A grain particle granulometry measurement system (100), according to any of Claims 1 to 5, **characterized in that** the vibration measurement device (110) comprises an impact plate (120), wherein the impacts generated by the grain flow in the vibration measurement device (110) are generated on the impact plate (120).

7. A grain particle granulometry measurement system (100), according to Claim 6, **characterized in that** the impact plate (120) is a contact surface configured to withstand impacts resulting from the grain flow and allow the vibration sensor (119) to collect information on the impacts generated by the grain flow.

8. A grain particle granulometry measurement system (100), according to Claim 7, **characterized in that** the surface of the impact plate (120) is inclined in relation to the direction of the grain flow.

9. A grain particle granulometry measurement system (100), according to any one of Claims 6 to 8, **characterized in that** the device (110) also comprises a regulator (116) and a passageway (117), wherein the regulator (116) is connected to the passageway (117) and the passageway (117) is connected to the impact plate (120), wherein the regulator (116) limits the grain flow, and wherein the impact plate is inclined in relation to the longitudinal axis of the passageway (117).

10. Method for measuring the grain particle granulometry, **characterized in that** it comprises the steps of:
measuring (320) the vibration characteristics caused by the impact of the grain flow through a vibration measurement device; and
calculating (370) the grain particle granulometry in the grain flow, based on the measured vibration characteristics,
wherein the step of calculating (370) the grain particle granulometry comprises inserting the vibration characteristics into a predefined mathematical model.

11. Method for measuring the grain particle granulometry, according to Claim 10, **characterized in that** it comprises additionally a step of creating (305) a mathematical model, based on the vibration characteristics of the grain flow from samples screened individually.

12. Calibration method for a grain particle granulometry measurement system, **characterized in that** it comprises the steps of:
classifying (220) grain samples by particle granulometry;
measuring (240) the vibration characteristics of a vibration caused by the impact of the grain flow of each one of the grain samples through a vibration measurement device; and
creating (280) a mathematical model, based on the measured vibration characteristics for each one of the grain samples,
wherein the mathematical model is a set of equations prepared in a manner that allows the calculation of a grain particle granulometry for the grain flow whose particle granulometry is unknown.

13. Calibration method, according to Claim 12, **characterized in that** the step of classifying grain samples individually is performed through screening.
